# EUROPÄISCHE PATENTANMELDUNG

(11) **EP 4 650 317 A1**
(43) Veröffentlichungstag der Anmeldung: **19.11.2025**
(21) Anmeldenummer: 25174580.8
(22) Anmeldetag: 06.05.2025
(51) Int. Cl.: B66F 7/02, B62B 3/00, B66F 7/28, B66F 9/06

(54) **MOBILE TRANSPORTVORRICHTUNG ZUM TRANSPORTIEREN EINES TECHNISCHEN GERÄTS**

(30) Priorität: 15.05.2024 DE 202024102485 U
(71) Anmelder: Deipenbrock, André, 48351 Everswinkel (DE)
(72) Erfinder: Deipenbrock, André, 48351 Everswinkel (DE)
(74) Vertreter: Pelster Behrends Patentanwälte PartG mbB

(57) **Zusammenfassung**

Die Erfindung betrifft eine mobile Transportvorrichtung (10) zum Transportieren eines technischen Geräts (100) von einem Aufnahmeort zu einem Installationsort, mit einem Traggestell (12), einer Geräteaufnahmeeinrichtung (36) zum Aufnehmen des zu transportierenden technischen Geräts (100) und einem an dem Traggestell (12) angeordneten Hebemechanismus (46) zum Anheben und Absenken des von der Geräteaufnahmeeinrichtung (36) aufgenommenen technischen Geräts (100).

## Beschreibung

Die Erfindung betrifft eine mobile Transportvorrichtung zum Transportieren eines technischen Geräts von einem Aufnahmeort zu einem Installationsort, mit einem Traggestell und einer Geräteaufnahmeeinrichtung zum Aufnehmen des zu transportierenden technischen Geräts.

In einer Vielzahl von Branchen ist es erforderlich, große und sperrige technische Geräte zu einem Installationsort zu verbringen, damit die technischen Geräte am Installationsort installiert und in Betrieb genommen werden können. Insbesondere bei sanitärtechnischen Installationen ist es häufig erforderlich technische Geräte, wie Wärmepumpen, Schaltschränke oder Heizkörper, an einen Installationsort zu verbringen, anzuschließen und in Betrieb zu nehmen. Da derartige technische Geräte durch mechanische Beanspruchung schnell beschädigt werden können und/oder aufgrund von Installationsvorgaben des Herstellers gestaltet sich der Transport derartiger Geräte vom Aufnahmeort zum Installationsort häufig als kosten- und zeitaufwendig. Das hohe Gewicht entsprechender Geräte führt außerdem dazu, dass die zuständigen Installateure schwere Lasten heben müssen, sodass die Installation entsprechender Geräte mit einem nicht unerheblichen Verletzungsrisiko einhergeht.

Die Erfindung zugrunde liegende Aufgabe besteht also darin, den Transport und die Installation von sperrigen und schweren technischen Geräten, wie bspw. Wärmepumpen, Schaltschränken oder Heizkörpern, zu vereinfachen.

Die Aufgabe wird gelöst durch eine mobile Transportvorrichtung der eingangs genannten Art, wobei die erfindungsgemäße mobile Transportvorrichtung einen an dem Traggestell angeordneten Hebemechanismus zum Anheben und Absenken des von der Geräteaufnahme in Richtung aufgenommenen technischen Geräts umfasst.

Die Transportvorrichtung erleichtert und vereinfacht den Transport des technischen Geräts von dem Aufnahmeort zu dem Installationsort erheblich. Schwere Hebearbeiten durch den Installateur werden effektiv vermieden. Aufgrund der gesteigerten Sicherheit und verringerten Belastung werden Fehl- bzw. Ausfallzeiten von Installateuren deutlich reduziert. Außerdem wird der Montageaufwand spürbar verringert. Technische Geräte, welche mit der mobilen Transportvorrichtung transportiert werden können, sind bspw. Wärmepumpen, Schaltschränke oder Heizkörper. Die mobile Transportvorrichtung kann sowohl innerhalb als auch außerhalb geschlossener Räume eingesetzt werden. Ferner kann die mobile Transportvorrichtung bspw. bis zu einer Windstärke von 3 Bft betriebssicher nutzbar sein. Das Traggestell der Transportvorrichtung kann ein Metallgestell und/oder ein Rohrgestell sein.

Die erfindungsgemäße Transportvorrichtung wird dadurch vorteilhaft weitergebildet, dass das Traggestell mehrere das Traggestell stabilisierende Gestellstreben aufweist, deren Positionen zur Anpassung der Gestellstruktur des Traggestells an die Form und/oder Größe des technischen Geräts und/oder an eine geplante Beladung der Transportvorrichtung mit dem technischen Gerät am Aufnahmeort und/oder eine geplante Entladung des technischen Geräts aus der Transportvorrichtung am Installationsort veränderbar sind. Bspw. kann zur Aufnahme des technischen Geräts aufgrund der Beladesituation eine andere Strebenanordnung bzw. Strebenkonfiguration am Traggestell erforderlich sein als beim Entladen des technischen Geräts aus der Transportvorrichtung am Installationsort. Ferner ist die mobile Transportvorrichtung für den Transport von technischen Geräten mit unterschiedlichen Formen und/oder Größen geeignet. Hierbei kann ein technisches Gerät mit einer spezifischen Form und/oder Größe eine andere Strebenanordnung bzw. Strebenkonfiguration am Traggestell erfordern als ein technisches Gerät mit einer anderen Form und/oder Größe. Die Gestellstreben können bspw. eine Rohrform aufweisen. Die Gestellstreben können Quadratrohre oder Rundrohre sein.

In einer bevorzugten Ausführungsform der erfindungsgemäßen mobilen Transportvorrichtung sind mehrere positionsveränderbare Gestellstreben als Längsstreben ausgebildet. Die mehreren als Längsstreben ausgebildeten positionsveränderbaren Gestellstreben verlaufen vorzugsweise parallel zueinander. Die Längsstreben erstrecken sich vorzugsweise in Längsrichtung. Die Längsrichtung erstreckt sich vorzugsweise entlang der Langseite der Transportvorrichtung. Die Längsstreben können in Vertikalrichtung voneinander beabstandet sein. Bspw. sind mehrere Längsstreben übereinander bzw. untereinander angeordnet. Die Längsstreben können in Querrichtung beabstandet zueinander sein. Bspw. sind mehrere Längsstreben nebeneinander angeordnet.

In einer weiteren bevorzugten Ausführungsform der mobilen Transportvorrichtung sind die Längsstreben des Traggestells in zwei in Querrichtung zueinander beabstandeten Längsstrebenebenen befestigbar. Die Längsstrebenebenen sind vorzugsweise Vertikalebenen und können parallel zueinander verlaufen. In einer ersten Längsstrebenebene können mehrere, bspw. bis zu zwei, bis zu drei oder bis zu vier Längsstreben befestigbar sein. In einer zweiten Längsstrebenebene können mehrere, bspw. bis zu zwei, bis zu drei oder bis zu vier Längsstreben befestigbar sein.

In einer anderen bevorzugten Ausführungsform der erfindungsgemäßen mobilen Transportvorrichtung befindet sich zwischen den Längsstrebenebenen ein Aufnahmeraum zur Aufnahme des technischen Geräts, wobei der Aufnahmeraum bodenlos ausgebildet ist, sodass mittels der Geräteaufnahmeeinrichtung ein auf dem Boden am Aufnahmeort stehendes technisches Gerät aufnehmbar ist und/oder ein aufgenommenes technisches Gerät mittels der Geräteaufnahmeeinrichtung auf den Boden am Installationsort absetzbar ist. Der Boden am Installationsort kann ein Fundamentboden eines Aufstellfundaments sein.

Es ist ferner eine erfindungsgemäße mobile Transportvorrichtung vorteilhaft, bei welcher das Traggestell mehrere Längsstrebenaufnahmen aufweist, wobei die Längsstreben reversibel und zerstörungsfrei lösbar mit den Längsstrebenaufnahmen verbindbar sind. Durch Lösen der Längsstreben kann die mobile Transportvorrichtung teilweise demontiert und in einen Stauzustand verbracht werden, in welchem die mobile Transportvorrichtung platzsparend transportiert werden kann. Zum Beladen und Entladen der mobilen Transportvorrichtung kann es erforderlich sein, dass eine oder mehrere Längsstreben temporär entnommen werden, damit die mobile Transportvorrichtung derart positioniert werden kann, dass das technische Gerät mittels der Geräteaufnahmeeinrichtung aufgenommen oder mittels der Geräteaufnahmeeinrichtung abgesetzt werden kann.

In einer weiteren bevorzugten Ausführungsform der erfindungsgemäßen mobilen Transportvorrichtung weisen die Längsstrebenaufnahmen jeweils eine Aufnahmekontur auf, in welche eine Längsstrebe einschiebbar ist. Die Längsstreben können in die Längsstrebenaufnahmen eingeschoben und aus den Längsstrebenaufnahmen herausgezogen werden. Die Aufnahmekontur kann rohrförmig sein. Bspw. weist die Aufnahmekontur im Wesentlichen die gleiche Querschnittsform auf, wie die Längsstreben, wobei der Querschnitt der Aufnahmekontur größer ist als der Querschnitt der Längsstreben, sodass die Längsstreben in die Aufnahmekontur einschiebbar und aus der Aufnahmekontur herausziehbar sind.

Es ist außerdem eine erfindungsgemäße mobile Transportvorrichtung vorteilhaft, bei welcher die Längsstrebenaufnahmen des Traggestells in zwei in Querrichtung zueinander beabstandeten Längsstrebenebenen angeordnet sind. Die Längsstrebenebenen sind vorzugsweise Vertikalebenen und können parallel zueinander sein. In einer ersten Längsstrebenebene können mehrere, bspw. zwei, drei oder vier Paare von fluchtend zueinander ausgerichteten Längsstrebenaufnahmen angeordnet sein. In einer zweiten Längsstrebenebene können mehrere, bspw. zwei, drei oder vier Paare von fluchtend zueinander ausgerichteten Längsstrebenebenen angeordnet sein.

In einer anderen bevorzugten Ausführungsform der erfindungsgemäßen mobilen Transportvorrichtung sind mehrere positionsveränderbare Gestellstreben als Querstreben ausgebildet. Die Querstreben verlaufen vorzugsweise parallel zueinander und/oder erstrecken sich in Querrichtung. Die Querrichtung erstreckt sich vorzugsweise entlang der Schmalseite der Transportvorrichtung. Die Querstreben können in Vertikalrichtung beabstandet zueinander sein und/oder übereinander oder untereinander angeordnet sein. Die Querstreben können in Längsrichtung beabstandet voneinander sein und/oder nebeneinander angeordnet sein. Die Querstreben des Traggestells können in zwei in Querrichtung zueinander beabstandeten Querstrebenebenen befestigbar sein. Die Querstrebenebenen können parallel zueinander verlaufen und/oder Vertikalebenen sein. In einer ersten Querstrebenebene können mehrere, bspw. bis zu zwei, bis zu drei oder bis zu vier Querstreben befestigbar sein. In einer zweiten Querstrebenebene können mehrere, bspw. bis zu zwei, bis zu drei oder bis zu vier Querstreben befestigbar sein. Das Traggestell kann mehrere Querstrebenaufnahmen aufweisen, wobei die Querstreben reversibel und zerstörungsfrei lösbar mit den Querstrebenaufnahmen verbindbar sind. Die Querstrebenaufnahmen können jeweils eine Aufnahmekontur aufweisen, in welche eine Querstrebe einschiebbar ist. Die Aufnahmekontur kann rohrförmig sein. Die Querstrebenaufnahmen des Traggestells können in zwei in Querrichtung zueinander beabstandeten Querstrebenebenen angeordnet sein. Die Querstrebenebenen können parallel zueinander verlaufen und/oder Vertikalebene sein. In einer ersten Querstrebenebene können mehrere, bspw. zwei, drei oder vier Paare von fluchtend zueinander ausgerichteten Querstrebenaufnahmen angeordnet sein. In einer zweiten Querstrebenebene können mehrere, bspw. zwei, drei oder vier Paare von fluchtend zueinander ausgerichteten Querstrebenaufnahmen angeordnet sein.

In einer Weiterbildung der erfindungsgemäßen mobilen Transportvorrichtung weist das Traggestell zwei Gestellrahmen auf, zwischen welchen sich ein Aufnahmeraum zur Aufnahme des technischen Geräts befindet. Der Aufnahmeraum ist vorzugsweise bodenlos ausgebildet. Das technische Gerät ist vorzugsweise in dem Aufnahmeraum des Traggestells zu positionieren, damit es von der Geräteaufnahmeeinrichtung der Transportvorrichtung aufgenommen und abgesetzt werden kann.

In einer weiteren bevorzugten Ausführungsform der erfindungsgemäßen mobilen Transportvorrichtung ist der Längsabstand der Gestellrahmen und somit die Längserstreckung des Aufnahmeraums zur Anpassung der Gestellstruktur des Traggestells an die Form und/oder Größe des technischen Geräts und/oder an eine geplante Beladung der Transportvorrichtung mit dem technischen Gerät am Aufnahmeort und/oder eine geplante Entladung des technischen Geräts aus der Transportvorrichtung am Installationsort veränderbar. Das Traggestell und/oder die Transportvorrichtung ist über die Längsabstandsveränderung der Gestellrahmen längenvariabel.

In einer weiteren bevorzugten Ausführungsform der erfindungsgemäßen mobilen Transportvorrichtung ist die Breite der Gestellrahmen und somit die Erstreckung des Aufnahmeraums in Querrichtung zur Anpassung der Gestellstruktur des Traggestells an die Form und/oder Größe des technischen Geräts und/oder an eine geplante Beladung der Transportvorrichtung mit dem technischen Gerät am Aufnahmeort und/oder eine geplante Entladung des technischen Geräts aus der Transportvorrichtung am Installationsort veränderbar. Das Traggestell und/oder die Transportvorrichtung ist über die Breitenveränderung der Gestellrahmen breitenvariabel.

In einer weiteren bevorzugten Ausführungsform der erfindungsgemäßen mobilen Transportvorrichtung ist die Höhe der Gestellrahmen und somit die Höhenerstreckung des Aufnahmeraums zur Anpassung der Gestellstruktur des Traggestells an die Form und/oder Größe des technischen Geräts und/oder an eine geplante Beladung der Transportvorrichtung mit dem technischen Gerät am Aufnahmeort und/oder eine geplante Entladung des technischen Geräts aus der Transportvorrichtung am Installationsort veränderbar. Das Traggestell und/oder die Transportvorrichtung ist über die Höhenveränderung der Gestellrahmen höhenvariabel.

In einer weiteren bevorzugten Ausführungsform der erfindungsgemäßen mobilen Transportvorrichtung sind die Längsstreben zum Verändern des Längsabstands der Gestellrahmen an unterschiedlichen Befestigungspunkten oder Befestigungsbereichen an den Gestellrahmen befestigbar. Das Traggestell kann einen Rastmechanismus umfassen. Die Befestigungspunkte können Rastpunkte des Rastmechanismus sein. Die Befestigungsbereiche können Rastbereiche des Rastmechanismus sein. Das Traggestell kann einen Arretiermechanismus umfassen. An den Befestigungspunkten oder Befestigungsbereichen können sich Arretierbohrungen des Arretiermechanismus befinden. Der Arretiermechanismus kann Arretierbolzen umfassen, welche in die Arretierbohrungen einsetzbar sind.

In einer anderen bevorzugten Ausführungsform weist die erfindungsgemäße mobile Transportvorrichtung mehrere Räder oder Rollen auf, welche an dem Traggestell zum Bewegen des Traggestells angeordnet sind. Vorzugsweise sind an dem Traggestell vier Räder oder Rollen angeordnet. Die Rollen können Lenkrollen sein. Die mobile Transportvorrichtung kann aufgrund der Räder oder Rollen auf einer Vielzahl von Böden eingesetzt werden. Die Böden sollten tragfähig und eben sein. Je nach Einsatzort, Bodenbeschaffenheit und Traglast sind geeignete Räder oder Rollen auszuwählen. Die mobile Transportvorrichtung kann eine Antriebseinrichtung aufweisen, mit welcher die Räder oder Rollen angetrieben werden. Die Antriebseinrichtung kann einen oder mehrere Elektromotoren umfassen. Ferner kann ein oder können mehrere Räder oder Rollen mit einer Bremse ausgestattet sein. Alternativ oder zusätzlich kann eine oder können mehrere Räder oder Rollen mit einem Richtungsfeststeller zum Festsetzen der Drehausrichtung ausgestattet sein. Beim Entladen der mobilen Transportvorrichtung wird die Transportvorrichtung samt dem aufgenommenen technischen Gerät beispielsweise unmittelbar vor einem Montagesockel, einem für die Installation des technischen Geräts vorbereiteten Gerätefundament oder einer Wandkonsole positioniert. Für die Überfahrt über den Montagesockel, das Gerätefundament oder die Wandkonsole werden die Räder oder Rollen auf der dem Montagesockel, dem Gerätefundament oder der Wandkonsole zugewandten Seite der Transportvorrichtung derart ausgerichtet, dass die Räder oder Rollen nach außen stehen. Dieses kann beispielsweise durch Bewegen der Transportvorrichtung vom Montagesockel, vom Gerätefundament oder von der Wandkonsole weg erreicht werden. Die Bremspedale der Räder oder Rollen ragen nun nach innen und können mit Richtungsfeststellern festgesetzt werden.

Die Feststellung der Drehausrichtung der Räder oder Rollen führt zu einer erheblichen Erhöhung der Standsicherheit der Transportvorrichtung bei der Überfahrt über den Montagesockel, das Gerätefundament oder die Wandkonsole, insbesondere durch die Verlegung der Kippkante bzw. der Drehachse der Räder oder Rollen vom Mittelpunkt des aufgenommenen technischen Gerätes weg. Gerade im Baustellengelände führt dies zu einer erheblich erhöhten Standsicherheit der Transportvorrichtung. Nach der Ausfahrt aus der Montagesituation können die Richtungsfeststeller wieder entfernt werden.

Es ist ferner eine erfindungsgemäße mobile Transportvorrichtung vorteilhaft, bei welcher der Hebemechanismus eine Winde umfasst. Die Winde kann über eine Kurbel oder einen Motor angetrieben werden. Die Winde kann eine Handwinde sein. Alternativ oder zusätzlich zu der Winde kann der Hebemechanismus eine andere Hebemechanik aufweisen.

In einer anderen bevorzugten Ausführungsform der mobilen Transportvorrichtung, weist der Hebemechanismus eine Führungseinrichtung zum Führen einer zur Lastaufnahme dienenden Strebenanordnung der Geräteaufnahmeeinrichtung auf. Die Führungseinrichtung kann bspw. eine Schienenführung sein. Die Führungseinrichtung dient zum Führen der Strebenanordnung der Geräteaufnahmeeinrichtung in Vertikalrichtung, sodass die zur Lastaufnahme dienende Strebenanordnung geführt angehoben und geführt abgesenkt werden kann.

Es ist ferner eine erfindungsgemäße mobile Transportvorrichtung bevorzugt, bei welcher die Geräteaufnahmeeinrichtung eine zur Lastaufnahme dienende Strebenanordnung aufweist, welche vorzugsweise eine Lastaufnahmegabel bildet. Das zu transportierende technische Gerät kann an der Strebenanordnung bzw. der Lastaufnahmegabel aufgehangen werden.

In einer weiteren bevorzugten Ausführungsform der erfindungsgemäß mobilen Transportvorrichtung befindet sich die zur Lastaufnahme dienende Strebenanordnung zwischen dem Gestellrahmen des Traggestells und/oder zwischen den Längsstrebenebenen. Vorzugsweise befindet sich die zur Lastaufnahme dienende Strebenanordnung in dem Aufnahmeraum und/oder oberhalb des Aufnahmeraums der mobilen Transportvorrichtung.

Die erfindungsgemäße mobile Transportvorrichtung wird ferner dadurch vorteilhaft weitergebildet, dass die Geräteaufnahmeeinrichtung einen oder mehrere Lastaufnahmegurte umfasst, welche mit dem zu transportierenden technischen Gerät verbindbar sind. Die Lastaufnahmegurte sind vorzugsweise an der zur Lastaufnahme dienenden Strebenanordnung fixiert. Die Lastaufnahmegurte können Lastschlingen bilden, welche mit Tragschlaufen an dem technischen Gerät verbindbar sind. Die als Lastschlingen ausgebildeten Lastaufnahmegurte können an einer als Lastaufnahmegabel ausgebildeten Strebenanordnung fixiert sein. Die Lastschlingen können als Rundschlingen ausgebildet sein.

In einer weiteren bevorzugten Ausführungsform weist die erfindungsgemäße mobile Transportvorrichtung einen oder mehrere Abstellkörper auf, welche nach Anheben eines aufgenommenen technischen Geräts unter dem technischen Gerät positionierbar sind, sodass das technische Gerät auf dem einen oder den mehreren Abstellkörpern abstellbar ist. Der eine oder die mehreren Abstellkörper können an Längsstreben befestigt werden. Der eine oder die mehreren Abstellkörper können auf die Längsstreben aufgesetzt oder in die Längsstreben eingehängt werden. Der eine oder die mehreren Abstellkörper können einhängbare Abstellprofile sein.

Es ist darüber hinaus eine erfindungsgemäße mobile Transportvorrichtung bevorzugt, bei welcher das Traggestell in eine Staplerkonfiguration umbaubar ist, in welcher sich die zur Lastaufnahme dienende Strebenanordnung nicht zwischen den Gestellrahmen des Traggestells und/oder nicht zwischen den Längsstrebenebenen befindet. In der Staplerkonfiguration kann die Transportvorrichtung ein Kontergewicht aufweisen, wobei das Kontergewicht und die Lastaufnahme auf gegenüberliegenden Seiten des Traggestells angeordnet sein können. Das Kontergewicht kann durch einen befüllbaren Wassertank gebildet werden.

Das Traggestell kann ferner einen oder mehrere Stabilisierungsausleger zur Vergrößerung der Standfläche und Erhöhung der Standsicherheit aufweisen. An dem einen oder den mehreren Stabilisierungsauslegern können Lenkrollen angeordnet sein. Die Lenkrollen sorgen für eine Vergrößerung der Standfläche und Erhöhung der Standsicherheit im mobilen Einsatz. Alternativ oder zusätzlich zu den Lenkrollen können Stützspindeln und/oder Stützteller an dem einen oder den mehreren Stabilisierungsauslegern angeordnet sein. Die Stützspindeln und/oder Stützteller sorgen für eine Vergrößerung der Standfläche und Erhöhung der Standsicherheit im stationären Einsatz.

Nachfolgend werden bevorzugte Ausführungsformen der Erfindung unter Bezugnahme auf die beiliegenden Zeichnungen näher erläutert und beschrieben. Dabei zeigen:
- Fig. 1: eine erfindungsgemäße Transportvorrichtung in einem Benutzungszustand in einer perspektivischen Darstellung;
- Fig. 2: die in der Fig. 1 abgebildete Transportvorrichtung in einem eingefahrenen Stauzustand;
- Fig. 3: eine erfindungsgemäße Transportvorrichtung in einer möglichen Gestellkonfiguration in einer schematischen Rückansicht;
- Fig. 4: die in der Fig. 3 abgebildete Transportvorrichtung in einer weiteren möglichen Gestellkonfiguration in einer schematischen Rückansicht;
- Fig. 5: die in der Fig. 3 abgebildete Transportvorrichtung in einer weiteren möglichen Gestellkonfiguration in einer schematischen Rückansicht;
- Fig. 6: eine erfindungsgemäße Transportvorrichtung in einer möglichen Gestellkonfiguration in einer schematischen Rückansicht;
- Fig. 7: die in der Fig. 6 abgebildete Transportvorrichtung in einer weiteren möglichen Gestellkonfiguration in einer schematischen Rückansicht;
- Fig. 8: die in der Fig. 6 abgebildete Transportvorrichtung in einer weiteren möglichen Gestellkonfiguration in einer schematischen Rückansicht;
- Fig. 9: die in der Fig. 6 abgebildete Transportvorrichtung in einer weiteren möglichen Gestellkonfiguration in einer schematischen Rückansicht;
- Fig. 10: eine erfindungsgemäße Transportvorrichtung in einer möglichen Gestellkonfiguration in einer schematischen Rückansicht;
- Fig. 11: die in der Fig. 10 abgebildete Transportvorrichtung in einer weiteren möglichen Gestellkonfiguration in einer schematischen Rückansicht;
- Fig. 12: die in der Fig. 10 abgebildete Transportvorrichtung in einer weiteren möglichen Gestellkonfiguration in einer schematischen Rückansicht;
- Fig. 13: die in der Fig. 10 abgebildete Transportvorrichtung in einer weiteren möglichen Gestellkonfiguration in einer schematischen Rückansicht;
- Fig. 14: die in der Fig. 10 abgebildete Transportvorrichtung in einer weiteren möglichen Gestellkonfiguration in einer schematischen Rückansicht;
- Fig. 15: die in der Fig. 10 abgebildete Transportvorrichtung in einer weiteren möglichen Gestellkonfiguration in einer schematischen Rückansicht;
- Fig. 16: eine erfindungsgemäße Transportvorrichtung während der Aufnahme eines technischen Geräts an einem Aufnahmeort in einer perspektivischen Darstellung;
- Fig. 17: die in der Fig. 16 abgebildete Transportvorrichtung zu einem im Vergleich zu dem in der Fig. 16 wiedergegebenen Zustand späteren Zeitpunkt während der Aufnahme des technischen Geräts am Aufnahmeort in einer perspektivischen Darstellung;
- Fig. 18: die in der Fig. 16 abgebildete Transportvorrichtung zu einem im Vergleich zu dem in der Fig. 17 wiedergegebenen Zustand späteren Zeitpunkt während der Aufnahme des technischen Geräts am Aufnahmeort in einer perspektivischen Darstellung;
- Fig. 19: die in der Fig. 16 abgebildete Transportvorrichtung zu einem im Vergleich zu dem in der Fig. 18 wiedergegebenen Zustand späteren Zeitpunkt während der Aufnahme des technischen Geräts am Aufnahmeort in einer perspektivischen Darstellung;
- Fig. 20: die in der Fig. 16 abgebildete Transportvorrichtung zu einem im Vergleich zu dem in der Fig. 19 wiedergegebenen Zustand späteren Zeitpunkt während der Aufnahme des technischen Geräts am Aufnahmeort in einer perspektivischen Darstellung;
- Fig. 21: die in der Fig. 16 abgebildete Transportvorrichtung zu einem im Vergleich zu dem in der Fig. 20 wiedergegebenen Zustand späteren Zeitpunkt während der Aufnahme des technischen Geräts am Aufnahmeort in einer perspektivischen Darstellung;
- Fig. 22: die in der Fig. 16 abgebildete Transportvorrichtung zu einem im Vergleich zu dem in der Fig. 21 wiedergegebenen Zustand späteren Zeitpunkt während der Aufnahme des technischen Geräts am Aufnahmeort in einer perspektivischen Darstellung;
- Fig. 23: die in der Fig. 16 abgebildete Transportvorrichtung während des Transports des technischen Geräts vom Aufnahmeort zum Installationsort in einer perspektivischen Darstellung;
- Fig. 24: die in der Fig. 16 abgebildete Transportvorrichtung während der Abgabe des technischen Geräts am Installationsort in einer perspektivischen Darstellung;
- Fig. 25: die in der Fig. 16 abgebildete Transportvorrichtung zu einem im Vergleich zu dem in der Fig. 24 wiedergegebenen Zustand späteren Zeitpunkt während der Abgabe des technischen Geräts am Installationsort in einer perspektivischen Darstellung;
- Fig. 26: die in der Fig. 16 abgebildete Transportvorrichtung zu einem im Vergleich zu dem in der Fig. 25 wiedergegebenen Zustand späteren Zeitpunkt während der Abgabe des technischen Geräts am Installationsort in einer perspektivischen Darstellung; und
- Fig. 27: die in der Fig. 16 abgebildete Transportvorrichtung zu einem im Vergleich zu dem in der Fig. 26 wiedergegebenen Zustand späteren Zeitpunkt während der Abgabe des technischen Geräts am Installationsort in einer perspektivischen Darstellung.

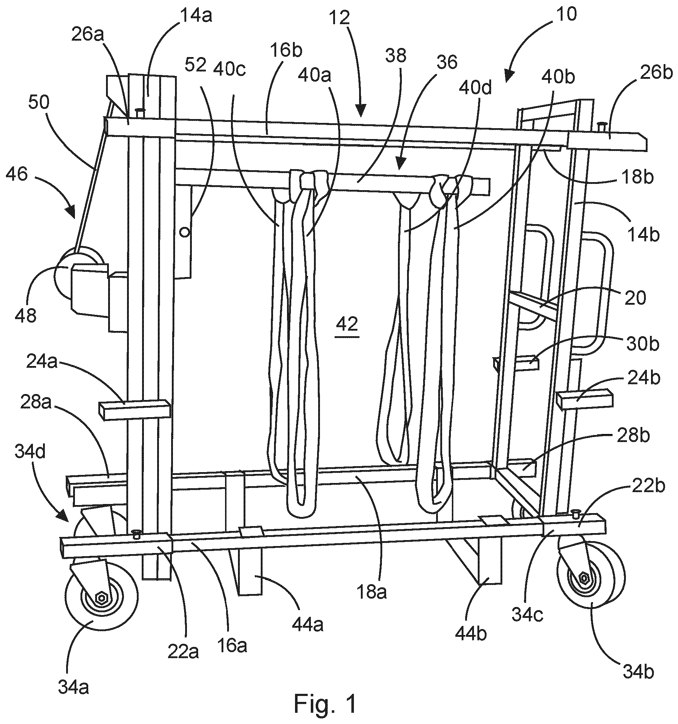

Die Fig.1 zeigt eine mobile Transportvorrichtung 10 zum Transportieren eines technischen Geräts 100 von einem Aufnahmeort zu einem Installationsort. Mit der mobilen Transportvorrichtung 10 können bspw. Wärmepumpen, Schaltschränke oder Heizkörper transportiert werden.

Die Transportvorrichtung 10 umfasst ein Traggestell 12, wobei das Traggestell 12 zwei Gestellrahmen 14a, 14b aufweist, zwischen welchen sich ein Aufnahmeraum 42 zur Aufnahme des technischen Geräts 100 befindet. Der Längsabstand der Gestellrahmen 14a, 14b und somit die Längserstreckung des Aufnahmeraums 42 ist zur Anpassung der Gestellstruktur des Traggestells 12 an die Form und Größe des technischen Geräts 100 sowie an eine geplante Beladung der Transportvorrichtung 10 mit dem technischen Gerät 100 am Aufnahmeort und eine geplante Entladung des technischen Geräts 100 aus der Transportvorrichtung 10 am Installationsort veränderbar. Das Gestell 12 bzw. die Transportvorrichtung 10 sind also längenvariabel.

Das Gestell 12 umfasst ferner mehrere das Traggestell 12 stabilisierende Gestellstreben 16a, 16b, 18a, 18b, 20, wobei die Positionen der Gestellstreben 16a, 16b, 18a, 18b zur Anpassung der Gestellstruktur des Traggestells 12 an die Form und Größe des technischen Geräts 100 sowie an eine geplante Beladung der Transportvorrichtung 10 mit dem technischen Gerät 100 am Aufnahmeort und eine geplante Entladung des technischen Geräts 100 aus der Transportvorrichtung 10 am Installationsort veränderbar sind. Die Gestellstreben 16a, 16b, 18a, 18b, 20 weisen eine Rohrform auf und sind als Quadratrohre ausgebildet.

Die Gestellstreben 16a, 16b, 18a, 18b sind als Längsstreben ausgebildet. Die Längsstreben 16a, 16b, 18a, 18b verlaufen parallel zueinander und erstrecken sich jeweils in Längsrichtungen. Die Längsrichtung betrifft die Langseite der Transportvorrichtung 10. Die Längsstreben 16a, 16b sind in Vertikalrichtung beabstandet und somit übereinander angeordnet. Die Längsstreben 18a, 18b sind in Vertikalrichtung beabstandet und somit übereinander angeordnet. Die Längsstreben 16a, 18a sind in Querrichtung beabstandet und somit nebeneinander angeordnet. Die Längsstreben 16b, 18b sind in Querrichtung voneinander beabstandet und somit nebeneinander angeordnet.

Die Längsstreben 16a, 16b sind in einer ersten Längsstrebenebene angeordnet. Die Längsstreben 18a, 18b sind in einer zweiten Längsstrebenebene angeordnet. Die erste und die zweite Längsstrebenebene sind parallel zueinander verlaufende Vertikalebenen, welche in Querrichtung beabstandet zueinander sind. Zwischen den Längsstrebenebenen befindet sich der Aufnahmeraum 42, welcher zur Aufnahme des technischen Geräts 100 dient. Der Aufnahmeraum 42 ist bodenlos ausgebildet, sodass mittels der Transportvorrichtung 10 eine auf einem Boden am Aufnahmeort stehendes technisches Gerät 100 aufnehmbar ist und ein aufgenommenes technisches Gerät 100 auf dem Boden am Installationsort absetzbar ist.

Das Traggestell 12 weist mehrere Längsstrebenaufnahmen 22a, 22b, 24a, 24b, 26a, 26b, 28a, 28b, 30a, 30b, 32a, 32b auf, wobei die Längsstreben 16a, 16b, 18a, 18b reversibel und zerstörungsfrei lösbar mit den Längsstrebenaufnahmen 22a, 22b, 24a, 24b, 26a, 26b, 28a, 28b, 30a, 30b, 32a, 32b verbindbar sind. Die Längsstrebenaufnahmen 22a, 22b, 24a, 24b, 26a, 26b, 28a, 28b, 30a, 30b, 32a, 32b, weisen jeweils eine Aufnahmekontur auf, in welche eine Längsstrebe einschiebbar ist. Die Aufnahmekontur der Längsstrebenaufnahmen 22a, 22b, 24a, 24b, 26a, 26b, 28a, 28b, 30a, 30b, 32a, 32b sind rohrförmig.

Die Längsstrebenaufnahmen 22a, 22b, 24a, 24b, 26a, 26b, 28a, 28b, 30a, 30b, 32a, 32b des Tragestellts 12 sind in den in Querrichtung zueinander beabstandeten Längsstrebenebenen angeordnet. Die Längsstrebenaufnahmen 22a, 22b, 24a, 24b, 26a, 26b befinden sich auf einer ersten Seite des Aufnahmeraums 42. Die Längsstrebenaufnahmen 28a, 28b, 30a, 30b, 32a, 32b befinden sich auf einer zweiten Seite des Aufnahmeraums 42. Die Längsstrebe 16a ist in die Längsstrebenaufnahmen 22a, 22b eingesetzt. Die Längsstrebe 16b ist in die Längsstrebenaufnahmen 26a, 26b eingesetzt. Die Längsstrebe 18a ist in die Längsstrebenaufnahmen 28a, 28b eingesetzt. Die Längsstrebe 18b ist in die Längsstrebenaufnahmen 32a, 32b eingesetzt.

Die Längsstreben 16a, 16b, 18a, 18b sind zum Verändern des Längsabstands der Gestellrahmen 14a, 14b an unterschiedlichen Befestigungspunkten der Längsstrebenaufnahmen 22a, 22b, 24a, 24b, 26a, 26b, 28a, 28b, 30a, 30b, 32a, 32b befestigbar. Das Traggestell 12 weist einen Arretiermechanismus auf, wobei sich an den Befestigungspunkten Arretierbohrungen befinden. Ferner umfasst der Arretiermechanismus des Traggestells 12 Arretierbolzen, welche in die Arretierbohrungen einsetzbar sind.

Die mobile Transportvorrichtung 10 umfasst ferner mehrere Räder 34a-34d, welche an dem Traggestell 12 zum Bewegen des Traggestells 12 angeordnet sind. Die Räder 34a, 34d befinden sich an dem Gestellrahmen 14a. Die Räder 34b, 34c befinden sich an dem Gestellrahmen 14b.

Die mobile Transportvorrichtung 10 umfasst ferner eine Geräteaufnahmeeinrichtung 36 zum Aufnehmen des zu transportierenden technischen Geräts 100. Die Geräteaufnahmeeinrichtung 36 umfasst eine zur Lastaufnahme dienende Strebenanordnung 38. Die Strebenanordnung 38 bildet eine Lastaufnahmegabel, an welcher Lastaufnahmegurte 40a-40d angeordnet sind. Die Lastaufnahmegurte 40a-40d hängen in dem Aufnahmeraum 42 hinein und dienen zum Verbinden mit dem zu transportierenden technischen Gerät 100. Die Lastaufnahmegurte 40a-40d sind Lastschlingen, welche mit Tragschlaufen an dem technischen Gerät 100 verbindbar sind. Die Lastschlingen sind als Rundschlingen ausgebildet.

Die mobile Transportvorrichtung 10 umfasst ferner zwei voneinander beabstandete Abstellkörper 44a, 44b, welche nach Anheben eines aufgenommenen technischen Geräts 100 unter dem technischen Gerät 100 positionierbar sind, sodass das technische Gerät 100 auf den Abstellkörpern 44a, 44b abstellbar ist. Die Abstellkörper 44a, 44b sind in die Längsstreben 16a, 18a des Traggestells 12 eingehängt. Die Abstellkörper 44a, 44b sind folglich einhängbare Abstellprofile.

Die mobile Transportvorrichtung 10 umfasst ferner einen an dem Traggestell 12 angeordneten Hebemechanismus 46 zum Anheben und Absenken des von der Geräteaufnahmeeinrichtung 36 aufgenommenen technischen Geräts 100. Der Hebemechanismus 46 umfasst eine Winde 48, wobei die Winde 48 über eine Handkurbel angetrieben wird. Ein mit der Winde 48 verbundenes Seil 50 ist mit einer Führungseinrichtung 52 verbunden. Die Führungseinrichtung 52 ist eine Schienenführung und dient zum Führen der als Lastgabel ausgebildeten Strebenanordnung 38.

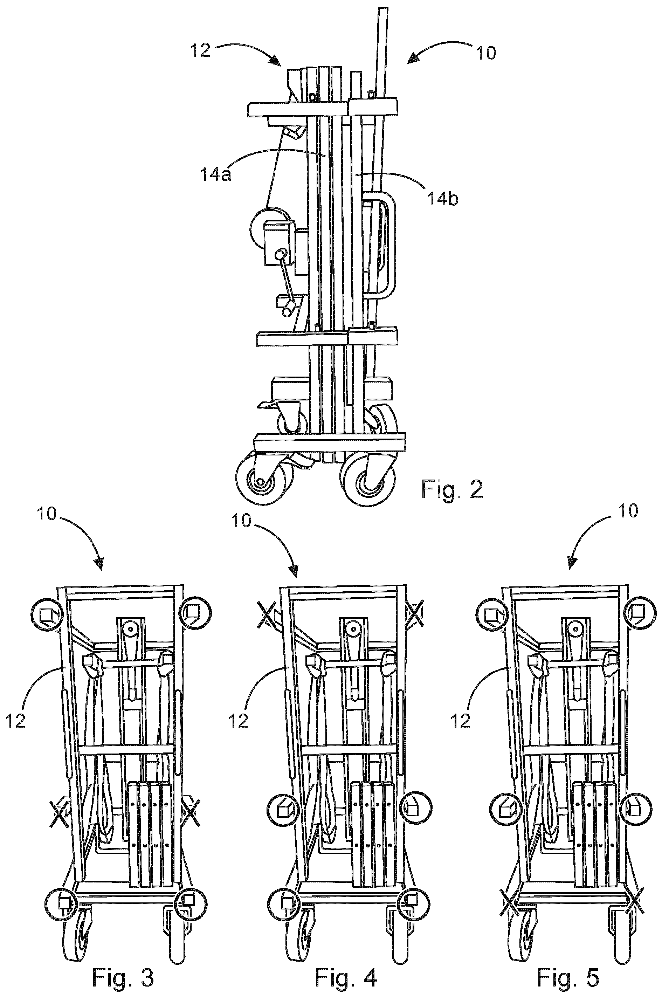

Die Fig. 2 zeigt eine Transportvorrichtung 10, nachdem die Längsstreben 16a, 16b, 18a, 18b aus den Längsstrebenaufnahmen 22a, 22b, 26a, 26b, 28a, 28b, 32a, 32b entnommen wurden und die Gestellrahmen 14a, 14b zusammengefahren wurden. Die Transportvorrichtung 10 kann in der dargestellten Konfiguration platzsparend transportiert werden.

Die Fig. 3 bis 5 zeigen mögliche Konfigurationen des Traggestells 12 einer Transportvorrichtung 10, wobei das Traggestell 12 in den jeweiligen Konfigurationen insgesamt vier Längsstreben aufweist.

Bei der in der Fig. 3 dargestellten Konfiguration befinden sich Längsstreben in den beiden unteren Paaren der Längsstrebenaufnahmen und den beiden oberen Paaren der Längsstrebenaufnahmen.

Bei der in der Fig. 4 dargestellten Konfiguration befinden sich Längsstreben in den beiden unteren Paaren der Längsstrebenaufnahmen und den beiden mittleren Paaren der Längsstrebenaufnahmen.

Bei der in der Fig. 5 dargestellten Konfiguration befinden sich Längsstreben in den beiden mittleren Paaren der Längsstrebenaufnahmen und den beiden oberen Paaren der Längsstrebenaufnahmen.

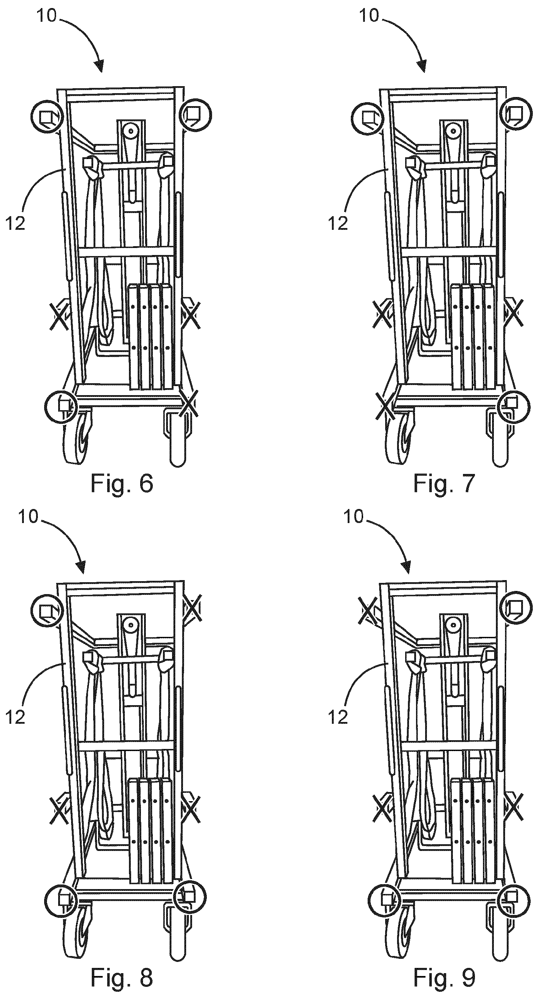

Die Fig. 6 bis 9 zeigen mögliche Konfigurationen des Traggestells 12 einer Transportvorrichtung 10, wobei das Traggestell 12 in den jeweiligen Konfigurationen insgesamt drei Längsstreben aufweist.

Bei der in der Fig. 6 dargestellten Konfiguration befindet sich eine Längsstrebe in dem links-unten angeordneten Paar der Längsstrebenaufnahmen, eine Längsstrebe befindet sich in dem links-oben angeordneten Paar der Längsstrebenaufnahmen und eine Längsstrebe befindet sich in dem rechts-oben angeordneten Paar der Längsstrebenaufnahmen.

Bei der in der Fig. 7 dargestellten Konfiguration befindet sich eine Längsstrebe in dem rechts-unten angeordneten Paar der Längsstrebenaufnahmen, eine Längsstrebe befindet sich in dem links-oben angeordneten Paar der Längsstrebenaufnahmen und eine Längsstrebe befindet sich in dem rechts-oben angeordneten Paar der Längsstrebenaufnahmen.

Bei der in der Fig. 8 dargestellten Konfiguration befindet sich eine Längsstrebe in dem links-unten angeordneten Paar der Längsstrebenaufnahmen, eine Längsstrebe befindet sich in dem rechts-unten angeordneten Paar der Längsstrebenaufnahmen und eine Längsstrebe befindet sich in dem links-oben angeordneten Paar der Längsstrebenaufnahmen.

Bei der in der Fig. 9 dargestellten Konfiguration befindet sich eine Längsstrebe in dem links-unten angeordneten Paar der Längsstrebenaufnahmen, eine Längsstrebe befindet sich in dem rechts-unten angeordneten Paar der Längsstrebenaufnahmen und eine Längsstrebe befindet sich in dem rechts-oben angeordneten Paar der Längsstrebenaufnahmen.

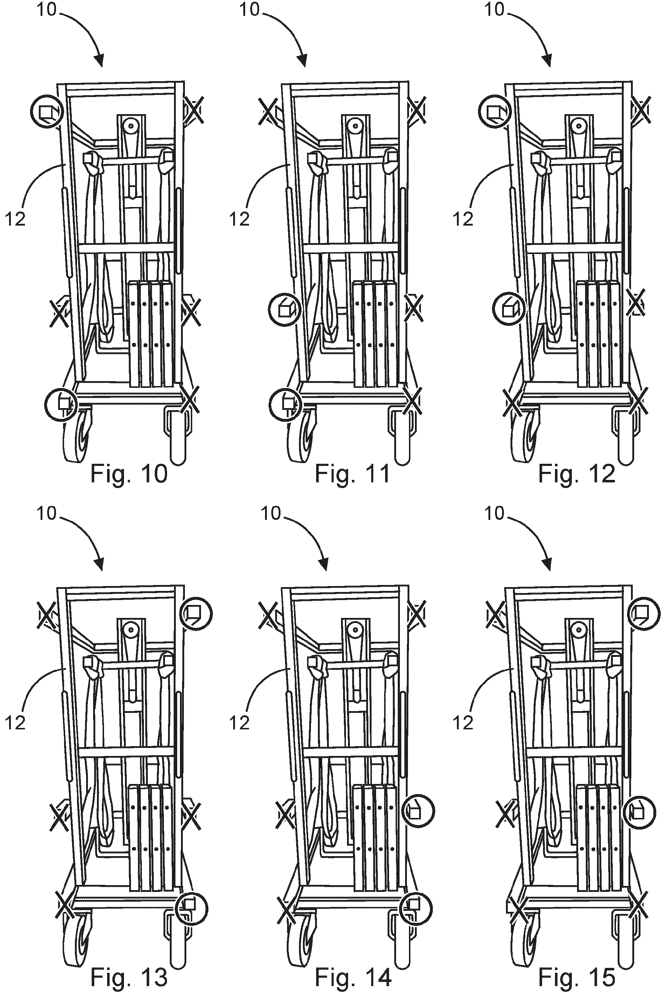

Die Fig. 10 bis 15 zeigen mögliche Konfigurationen des Traggestells 12 einer Transportvorrichtung 10, wobei das Traggestell 12 in den jeweiligen Konfigurationen insgesamt zwei Längsstreben aufweist.

Bei der in der Fig. 10 dargestellten Konfiguration befindet sich eine Längsstrebe in dem links-unten angeordneten Paar der Längsstrebenaufnahmen und eine Längsstrebe befindet sich in dem links-oben angeordneten Paar der Längsstrebenaufnahmen.

Bei der in der Fig. 11 dargestellten Konfiguration befindet sich eine Längsstrebe in dem links-unten angeordneten Paar der Längsstrebenaufnahmen und eine Längsstrebe befindet sich in dem links-mittig angeordneten Paar der Längsstrebenaufnahmen.

Bei der in der Fig. 12 dargestellten Konfiguration befindet sich eine Längsstrebe in dem links-mittig angeordneten Paar der Längsstrebenaufnahmen und eine Längsstrebe befindet sich in dem links-oben angeordneten Paar der Längsstrebenaufnahmen.

Bei der in der Fig. 13 dargestellten Konfiguration befindet sich eine Längsstrebe in dem rechts-unten angeordneten Paar der Längsstrebenaufnahmen und eine Längsstrebe befindet sich in dem rechts-oben angeordneten Paar der Längsstrebenaufnahmen.

Bei der in der Fig. 14 dargestellten Konfiguration befindet sich eine Längsstrebe in dem rechts-unten angeordneten Paar der Längsstrebenaufnahmen und eine Längsstrebe befindet sich in dem rechts-mittig angeordneten Paar der Längsstrebenaufnahmen.

Bei der in der Fig. 15 dargestellten Konfiguration befindet sich eine Längsstrebe in dem rechts-mittig angeordneten Paar der Längsstrebenaufnahmen und eine Längsstrebe befindet sich in dem rechts-oben angeordneten Paar der Längsstrebenaufnahmen.

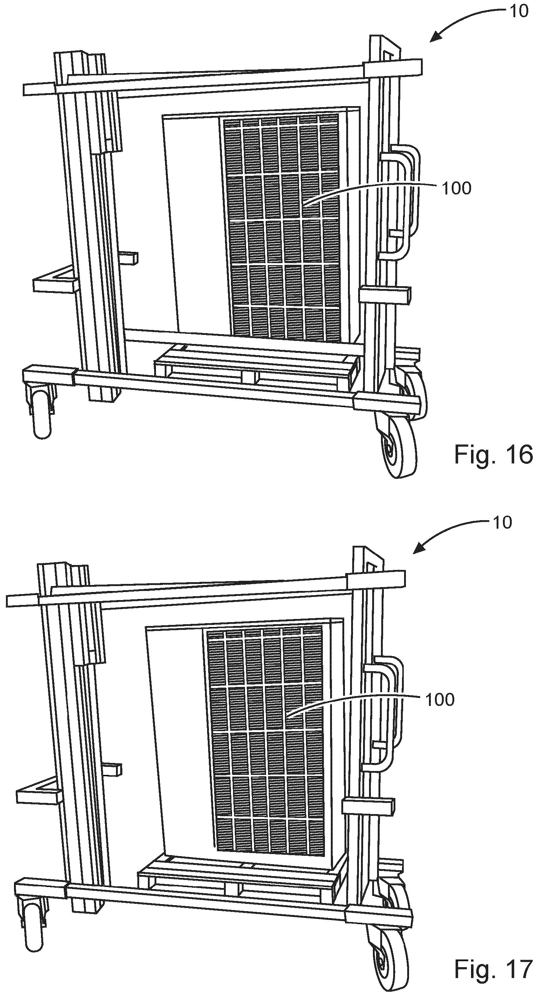

Die Fig. 16 bis 22 zeigen das Beladen einer Transportvorrichtung 10 mit einem technischen Gerät 100, nämlich einer Wärmepumpe.

In dem in der Fig. 16 dargestellten Zustand befindet sich die Transportvorrichtung 10 unmittelbar neben dem technischen Gerät 100. Ein Überfahren des technischen Geräts 10 ist in der dargestellten Gestellkonfiguration nicht möglich, da die unteren Längsstreben des Traggestells beim Überfahren des technischen Geräts 100 an dem technischen Gerät 100 anschlagen würden.

In der Fig. 17 ist eine Gestellkonfiguration dargestellt, in welcher eine der unteren Längsstreben entfernt wurde, sodass das technische Gerät 100 überfahren werden kann.

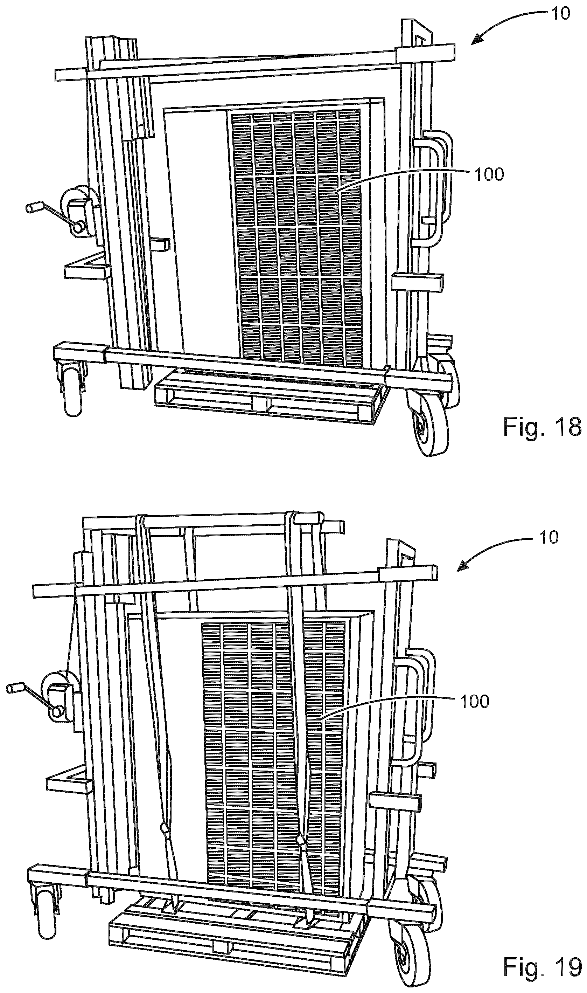

Die Fig. 18 zeigt einen Zustand, in welchem das technische Gerät 100 von der Transportvorrichtung 10 überfahren wurde, sodass sich das technische Gerät 100 in dem Aufnahmeraum 42 der Transportvorrichtung 10 befindet.

Wie Fig. 19 dargestellt, werden anschließend die Lastaufnahmegurte 40a-40d der Geräteaufnahmeeinrichtung 36 an dem technischen Gerät 100 befestigt.

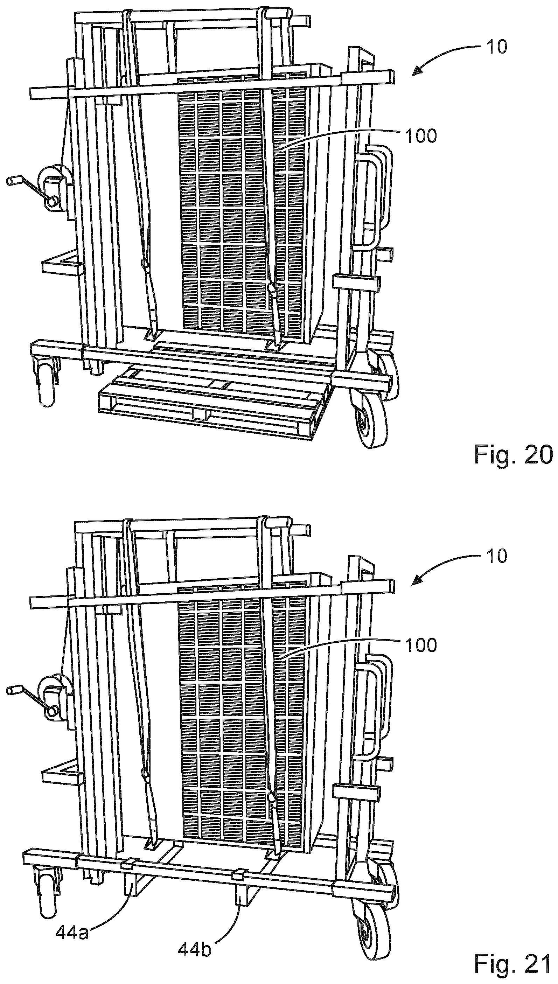

Die Fig. 20 zeigt, wie das technische Gerät 100 mittels des Hebemechanismus 46 angehoben werden kann, nachdem die Lastaufnahmegurte 40a-40d der Geräteaufnahmeeinrichtung 36 an dem technischen Gerät 100 befestigt wurden.

Die Fig. 21 zeigt, dass die Transportpalette nach dem Anheben des technischen Geräts 100 entfernt werden kann, wobei nach Entfernen der Transportpalette die Abstellkörper 44a, 44b in die unteren Längsstreben des Traggestells eingehängt werden können.

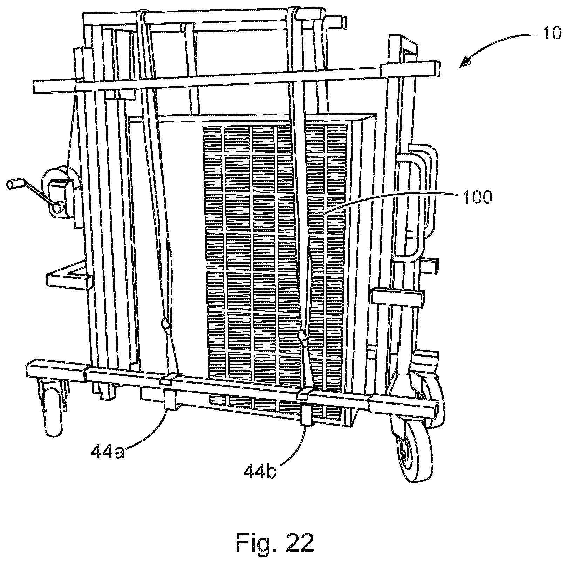

Wie in der Fig. 22 dargestellt, kann das technische Gerät 100 dann auf die Abstellkörper 44a, 44b abgestellt werden, sodass die Lastaufnahmegurte 44a-44d entlastet werden.

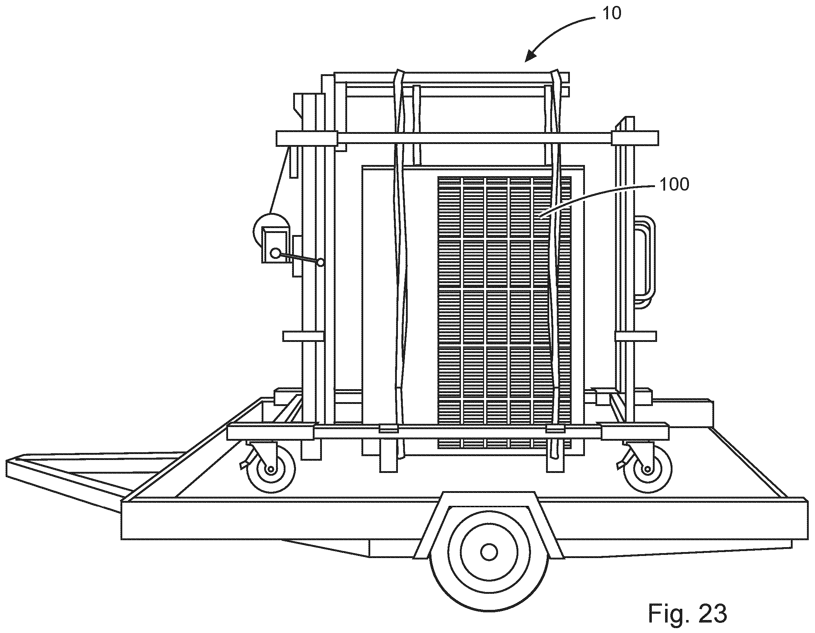

Die Fig. 23 zeigt eine beladene Transportvorrichtung 10, welche auf einen Transportaufhänger gefahren wurde. Nach dem Befestigen der Transportvorrichtung 10 an dem Transportanhänger kann die Transportvorrichtung samt dem technischen Gerät 100 dann zum Installationsort gebracht werden. Der Installationsort kann bspw. eine Baustelle sein, an welcher das technische Gerät 100 zu installieren ist.

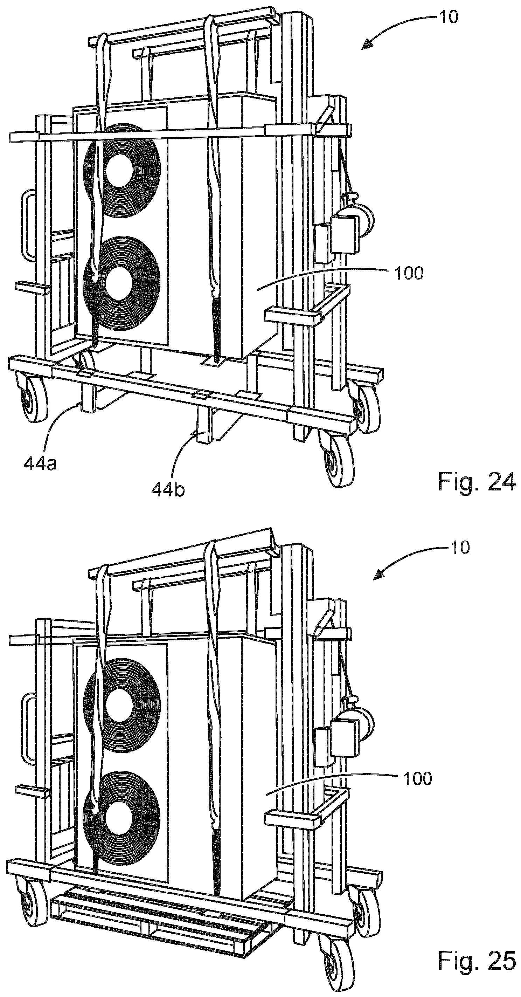

Die Fig. 24 zeigt, dass das technische Gerät 100 am Installationsort zunächst wieder über den Hebemechanismus 46 angehoben wird, sodass die Abstellkörper 44a, 44b entfernt werden können.

Wie in der Fig. 25 dargestellt, kann das technische Gerät 100 nach Entfernung der Abstellkörper 44a, 44b am Installationsort abgestellt werden. Das Abstellen erfolgt durch Absenken des technischen Geräts 100 über den Hebemechanismus 46.

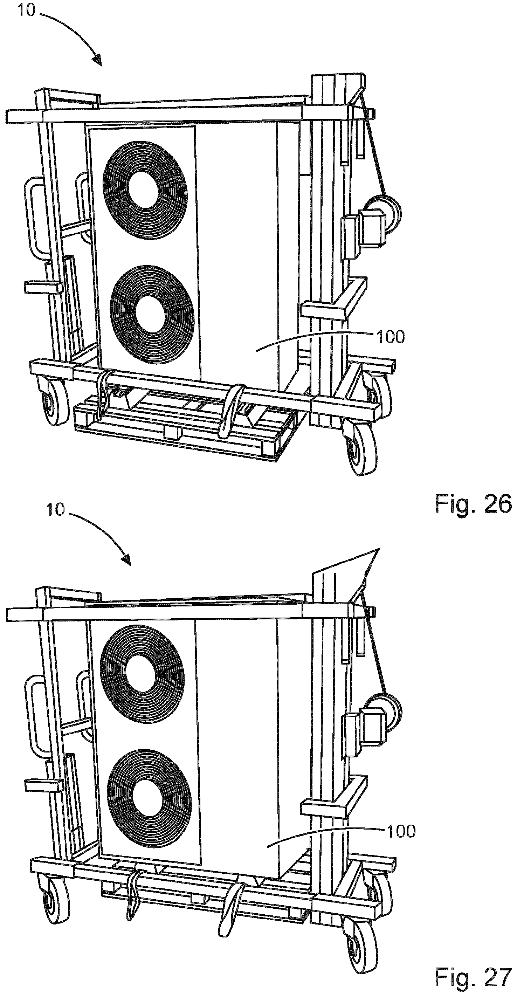

Die Fig. 26 zeigt, dass nach Abstellen des technischen Geräts 100 am Installationsort die Lastaufnahmegurte 40a-40d entfernt werden können.

Wie in der Fig. 27 dargestellt, kann dann eine untere Längsstrebe des Traggestells 12 entfernt werden, sodass das technische Gerät 100 freigegeben wird und die Transportvorrichtung 10 entfernt werden kann.

### Bezugszeichen

- 10: Transportvorrichtung
- 12: Traggestell
- 14a, 14b: Gestellrahmen
- 16a-16c: Gestellstreben
- 18a-18c: Gestellstreben
- 20: Gestellstreben
- 22a, 22b: Längsstrebenaufnahmen
- 24a, 24b: Längsstrebenaufnahmen
- 26a, 26b: Längsstrebenaufnahmen
- 28a, 28b: Längsstrebenaufnahmen
- 30a, 30b: Längsstrebenaufnahmen
- 32a, 32b: Längsstrebenaufnahmen
- 34a-34d: Räder
- 36: Geräteaufnahmeeinrichtung
- 38: Strebenanordnung
- 40a-40d: Lastaufnahmegurte
- 42: Aufnahmeraum
- 44a, 44b: Abstellkörper
- 46: Hebemechanismus
- 48: Winde
- 50: Seil
- 52: Führungseinrichtung

- 100: Gerät

## Patentansprüche

1. Mobile Transportvorrichtung (10) zum Transportieren eines technischen Geräts (100) von einem Aufnahmeort zu einem Installationsort, mit
- einem Traggestell (12), und
- einer Geräteaufnahmeeinrichtung (36) zum Aufnehmen des zu transportierenden technischen Geräts (100),
**gekennzeichnet durch** einen an dem Traggestell (12) angeordneten Hebemechanismus (46) zum Anheben und Absenken des von der Geräteaufnahmeeinrichtung (36) aufgenommenen technischen Geräts (100).

2. Mobile Transportvorrichtung (10) nach Anspruch 1,
**dadurch gekennzeichnet, dass** das Traggestell (12) mehrere das Traggestell (12) stabilisierende Gestellstreben (16a-16c, 18a-18c, 20) aufweist, deren Positionen zur Anpassung der Gestellstruktur des Traggestells (12) an die Form und/oder Größe des technischen Geräts (100) und/oder an eine geplante Beladung der Transportvorrichtung (10) mit dem technischen Geräts (100) am Aufnahmeort und/oder eine geplante Entladung des technischen Geräts (100) aus der Transportvorrichtung (10) am Installationsort veränderbar sind.

3. Mobile Transportvorrichtung (10) nach Anspruch 2,
**dadurch gekennzeichnet, dass** mehrere positionsveränderbare Gestellstreben (16a-16c, 18a-18c, 20) als Längsstreben (16a-16c, 18a-18c) ausgebildet sind, wobei die Längsstreben (16a-16c, 18a-18c) des Traggestells (12) in zwei in Querrichtung zueinander beabstandeten Längsstrebenebenen befestigbar sind.

4. Mobile Transportvorrichtung (10) nach Anspruch 3,
**dadurch gekennzeichnet, dass** sich zwischen den Längsstrebenebenen ein Aufnahmeraum (42) zur Aufnahme des technischen Geräts (100) befindet, wobei
- eine oder mehrere Längsstreben (16a-16c, 18a-18c) des Traggestells (12) zum Beladen und Entladen der mobilen Transportvorrichtung (10) temporär entnehmbar sind, wodurch das technische Gerät (100) von der Transportvorrichtung (10) derart überfahrbar ist, sodass sich das technische Gerät (100) in dem Aufnahmeraum (42) der Transportvorrichtung (10) befindet: und/oder
- der Aufnahmeraum (42) bodenlos ausgebildet ist, sodass mittels der Geräteaufnahmeeinrichtung (36) ein auf dem Boden am Aufnahmeort stehendes technisches Gerät (100) aufnehmbar ist und/oder ein aufgenommenes technisches Gerät (100) mittels der Geräteaufnahmeeinrichtung (36) auf den Boden am Installationsort absetzbar ist.

5. Mobile Transportvorrichtung (10) nach Anspruch 3 oder 4,
**dadurch gekennzeichnet, dass** das Traggestell (12) mehrere Längsstrebenaufnahmen (22a, 22b, 24a, 24b, 26a, 26b, 28a, 28b, 30a, 30b, 32a, 32b) aufweist, wobei die Längsstreben (16a-16c, 18a-18c) reversibel und zerstörungsfrei lösbar mit den Längsstrebenaufnahmen (22a, 22b, 24a, 24b, 26a, 26b, 28a, 28b, 30a, 30b, 32a, 32b) verbindbar sind, wobei die Längsstrebenaufnahmen (22a, 22b, 24a, 24b, 26a, 26b, 28a, 28b, 30a, 30b, 32a, 32b) vorzugsweise jeweils eine Aufnahmekontur aufweisen, in welche eine Längsstrebe einschiebbar ist.

6. Mobile Transportvorrichtung (10) nach einem der Ansprüche 2 bis 5,
**dadurch gekennzeichnet, dass** mehrere positionsveränderbare Gestellstreben (16a-16c, 18a-18c, 20) als Querstreben ausgebildet sind.

7. Mobile Transportvorrichtung (10) nach einem der vorstehenden Ansprüche, **dadurch gekennzeichnet, dass** das Traggestell (12) zwei Gestellrahmen (14a, 14b) aufweist, zwischen welchen sich ein Aufnahmeraum (42) zur Aufnahme des technischen Geräts (100) befindet.

8. Mobile Transportvorrichtung (10) nach Anspruch 7,
**dadurch gekennzeichnet, dass** der Längsabstand der Gestellrahmen (14a, 14b) und somit die Längserstreckung des Aufnahmeraums (42) zur Anpassung der Gestellstruktur des Traggestells (12) an die Form und/oder Größe des technischen Geräts (100) und/oder an eine geplante Beladung der Transportvorrichtung (10) mit dem technischen Gerät (100) am Aufnahmeort und/oder eine geplante Entladung des technischen Geräts (100) aus der Transportvorrichtung (10) am Installationsort veränderbar ist, wobei die Längsstreben (16a-16c, 18a-18c) zum Verändern des Längsabstands der Gestellrahmen (14a, 14b) vorzugsweise an unterschiedlichen Befestigungspunkten oder Befestigungsbereichen an den Gestellrahmen (14a, 14b) befestigbar sind.

9. Mobile Transportvorrichtung (10) nach einem der vorstehenden Ansprüche, **gekennzeichnet durch** mehrere Räder (34a-34d) oder Rollen, welche an dem Traggestell (12) zum Bewegen des Traggestells (12) angeordnet sind.

10. Mobile Transportvorrichtung (10) nach einem der vorstehenden Ansprüche, **dadurch gekennzeichnet, dass** der Hebemechanismus (46) eine Winde (48) umfasst.

11. Mobile Transportvorrichtung (10) nach einem der vorstehenden Ansprüche, **dadurch gekennzeichnet, dass** die Geräteaufnahmeeinrichtung (36) eine zur Lastaufnahme dienende Strebenanordnung (38) aufweist, welche vorzugsweise eine Lastaufnahmegabel bildet.

12. Mobile Transportvorrichtung (10) nach Anspruch 11,
**dadurch gekennzeichnet, dass** sich die zur Lastaufnahme dienende Strebenanordnung (38) zwischen den Gestellrahmen (14a, 14b) des Traggestells (12) und/oder zwischen den Längsstrebenebenen befindet.

13. Mobile Transportvorrichtung (10) nach einem der vorstehenden Ansprüche, **dadurch gekennzeichnet, dass** die Geräteaufnahmeeinrichtung (36) einen oder mehrere Lastaufnahmegurte (40a-40d) umfasst, welche mit dem zu transportierenden technischen Gerät (100) verbindbar sind.

14. Mobile Transportvorrichtung (10) nach einem der vorstehenden Ansprüche, **gekennzeichnet durch** einen oder mehrere Abstellkörper (44a, 44b), welche nach Anheben eines aufgenommenen technischen Geräts (100) unter dem technischen Gerät (100) positionierbar sind, sodass das technische Gerät (100) auf dem einen oder den mehreren Abstellkörpern (44a, 44b) abstellbar ist.

15. Mobile Transportvorrichtung (10) nach Anspruch 11 oder 12,
**dadurch gekennzeichnet, dass** das Traggestell (12) in eine Staplerkonfiguration umbaubar ist, in welcher sich die zur Lastaufnahme dienende Strebenanordnung (38) nicht zwischen den Gestellrahmen (14a, 14b) des Traggestells (12) und/oder nicht zwischen den Längsstrebenebenen befindet.
